(19) Europäisches Patentamt / European Patent Office / Office européen des brevets

(11) **EP 4 613 510 A1**

(12) **EUROPEAN PATENT APPLICATION**

(43) Date of publication:
**10.09.2025 Bulletin 2025/37**

(21) Application number: **24162040.0**

(22) Date of filing: **07.03.2024**

(51) International Patent Classification (IPC):
**B60C 11/24** *(2006.01)* **B60W 50/00** *(2006.01)*

(52) Cooperative Patent Classification (CPC):
**B60C 11/246; B60W 50/038;** B60W 2050/0075;
B60W 2050/0083; B60W 2720/106

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **VOLVO TRUCK CORPORATION
405 08 Göteborg (SE)**

(72) Inventor: **GHANDRIZ, Toheed
431 47 MÖLNDAL (SE)**

(74) Representative: **Ström & Gulliksson AB
P.O. Box 4188
203 13 Malmö (SE)**

(54) **TYRE WEAR MANAGEMENT FOR A VEHICLE**

(57) A computer system for determining a limit for a control parameter for a vehicle the computer system comprising processing circuitry configured to: acquire a tyre wear limit for one or more wheels of the vehicle; acquire a first cost evolution associated with a control parameter for the vehicle; and determine a limit for the control parameter based on the first cost evolution and the tyre wear limit; wherein control of the vehicle according to the limit for the control parameter does not exceed a cost associated with the tyre wear limit.

<u>200</u>

```
Acquire a tyre wear limit for one or more wheel () of
the vehicle                                               ─ 202
                    │
                    ▼
Acquire a first cost evolution associated with a control
parameter for the vehicle                                 ─ 204
                    │
                    ▼
Determine a cost associated with the tyre wear limit     ─ 206
                    │
                    ▼
Determine a limit for the control parameter based on
the first cost evolution, the limit corresponding to the
cost associated with the tyre wear limit                 ─ 208
                    │
                    ▼
Provide the limit for the control parameter to a vehicle
control system                                           ─ 210
```

**FIG. 2**

Description

## TECHNICAL FIELD

The disclosure relates generally to vehicle control. In particular aspects, the disclosure relates to tyre wear management for a vehicle. The disclosure can be applied in heavy-duty vehicles, such as trucks, buses, and construction equipment. In particular, the disclosure can be applied in multi-unit vehicle combinations with distributed propulsion and energy storage. Although the disclosure may be described with respect to a particular vehicle, the disclosure is not restricted to any particular vehicle.

## BACKGROUND

In vehicle motion management, a control system of a vehicle may determine control signals for actuators of the vehicle in order to satisfy the requested global forces of the vehicle. For example, the control system may receive an input related to a manoeuvre for the vehicle and state information of the vehicle comprising motion parameters and determine control signals in the form of propulsion and braking instructions that meet the requested global forces of the vehicle subject to certain constraints, for example energy and safety constraints.

Many vehicles today are run with control requests that seek to meet a certain goal, for example energy efficiency, safety, range, etc. However, tyre wear is not always taken into account. For example, regenerative braking may be prioritised in order to increase energy efficiency, resulting in the axial torque on the wheels being increased. This leads to an increase in tyre wear, which can result in a number of negative impacts, such as reduction of friction and increase of particulate emissions from the tyres. In this scenario, the benefits of regenerative braking will at some point be outweighed by the downsides of tyre wear.

It is therefore desired to develop a solution for vehicle motion management that addresses or at least mitigates some of these issues.

## SUMMARY

This disclosure provides systems, methods and other approaches for determining a limit for a control parameter for a vehicle such that control requests for the vehicle meet a certain limit for tyre wear. In particular, a tyre wear limit is acquired for one or more tyres of the vehicle. The tyre wear limit has an associated cost, for example a level of emissions associated with running the vehicle at that limit. An evolution of corresponding costs for a control parameter of the vehicle is also acquired, for example how emissions evolve with increasing axial torque. The cost associated with the tyre wear limit can then be used to find a corresponding value for the control parameter based on the cost evolution. That value can be used as a limit for the control parameter. In this way, it can be ensured that costs associated with both tyre wear and control parameters are balanced appropriately.

According to a first aspect of the disclosure, there is provided a computer system for determining a limit for a control parameter for a vehicle, the computer system comprising processing circuitry configured to acquire a tyre wear limit for one or more wheels of the vehicle, acquire a first cost evolution associated with a control parameter for the vehicle, and determine a limit for the control parameter based on the first cost evolution and the tyre wear limit, wherein control of the vehicle according to the limit for the control parameter does not exceed a cost associated with the tyre wear limit.

The first aspect of the disclosure may seek to provide a computer system that balances tyre wear with other operational considerations of a vehicle. By setting a limit for a control parameter for a vehicle based on a tyre wear limit, it can be ensured that operation of the vehicle does not exceed the tyre wear limit. This means that vehicle performance can be optimised in a certain way, for example to improve fuel efficiency, safety, range, etc., without overly compromising tyre performance and causing negative effects such as reduction of friction and increase of particulate emissions from the tyres.

Optionally in some examples, including in at least one preferred example, the tyre wear limit is a regulatory tyre wear limit or manufacturer recommendation. A technical benefit may include that a limit for a control parameter for a vehicle is determined that satisfies regulatory or recommended performance limits for the tyres.

Optionally in some examples, including in at least one preferred example, the processing circuitry is further configured to determine a cost associated with the tyre wear limit, and determine the limit for the control parameter based on the first cost evolution, the limit corresponding to the cost associated with the tyre wear limit. A technical benefit may include that a limit for a control parameter for a vehicle is determined with a dependence on a cost associated with the control parameter. In this way, different operational considerations of a vehicle can be balanced with tyre wear.

Optionally in some examples, including in at least one preferred example, the processing circuitry is configured to determine the tyre wear limit by acquiring a second cost evolution associated with tyre wear relative to the control parameter, determining an intersection between the first cost evolution and the second cost evolution, and determining a tyre wear limit corresponding to the intersection. A technical benefit may include that a limit for a control parameter for a vehicle is determined with a dependence on a cost associated with tyre wear, rather than merely based on a tyre wear limit. In this way, different operational considerations of a vehicle can be balanced with tyre wear.

Optionally in some examples, including in at least one preferred example, the second cost evolution represents one or more of particulate emissions from a tyre, friction loss from a tyre, and costs associated with tyre maintenance. A technical benefit may include that environmental and performance factors related to the tyres of the vehicle are included in the optimisation such that a vehicle motion profile can be determined based on such considerations.

Optionally in some examples, including in at least one preferred example, the processing circuitry is configured to determine a cost associated with particulate emissions and/or friction loss from a tyre as a function of a longitudinal slip associated with the one or more wheels. A technical benefit may include that that environmental and performance factors related to the tyres of the vehicle are included in determining the limit for the control parameter.

Optionally in some examples, including in at least one preferred example, the first cost evolution and the second cost evolution are normalised. A technical benefit may include that different cost evolutions can be compared in a relevant manner, such that correspondence between the tyre wear limit and the limit for the control parameter.

Optionally in some examples, including in at least one preferred example, the control parameter for the vehicle comprises an axial torque and/or longitudinal slip associated with the one or more wheels. A technical benefit may include that a limit for a control parameter for a vehicle that has a particular influence on tyre wear is provided, ensuring that the balance between tyre wear and other operational considerations of a vehicle can be provided in a robust manner.

Optionally in some examples, including in at least one preferred example, the first cost evolution represents one or more of $CO_2$ emissions, electrical energy usage, or fuel consumption. A technical benefit may include that environmental and efficiency factors of the vehicle are included when determining a limit for a control parameter for a vehicle based on a tyre wear limit.

Optionally in some examples, including in at least one preferred example, the one or more wheels are associated with one or more driven axles of the vehicle. A technical benefit may include that driven axles, where tyre wear caused by axial torque and/or longitudinal slip is especially higher, are controlled appropriately to provide an adequate balance between tyre wear and other operational considerations of a vehicle.

Optionally in some examples, including in at least one preferred example, the processing circuitry is further configured to provide the limit for the control parameter to a control system configured to determine control inputs for the vehicle. A technical benefit may include that a control system of the vehicle is able to control the vehicle to provide the desired balance between tyre wear and other operational considerations of a vehicle.

According to a second aspect of the disclosure, there is provided a vehicle comprising the computer system of any preceding example. The second aspect of the disclosure may seek to provide a vehicle capable of being operated to balance tyre wear with other operational considerations of a vehicle.

According to a third aspect of the disclosure, there is provided a computer-implemented method for determining a limit for a control parameter for a vehicle, the method comprising acquiring, by processing circuitry of a computer system, a tyre wear limit for one or more wheels of the vehicle, acquiring, by the processing circuitry, a cost evolution associated with a control parameter of the vehicle, determining, by the processing circuitry, a limit for the control parameter based on the cost evolution and the tyre wear limit, wherein control of the vehicle according to the limit for the control parameter does not exceed a cost associated with the tyre wear limit.

The third aspect of the disclosure may seek to provide a computer-implemented method that balances tyre wear with other operational considerations of a vehicle. By setting a limit for a control parameter for a vehicle based on a tyre wear limit, it can be ensured that operation of the vehicle does not exceed the tyre wear limit. This means that vehicle performance can be optimised in a certain way, for example to improve fuel efficiency, safety, range, etc., without overly compromising tyre performance and causing negative effects such as reduction of friction and increase of particulate emissions from the tyres.

According to a fourth aspect of the disclosure, there is provided a computer program product comprising program code for performing, when executed by processing circuitry, the computer-implemented method of the third aspect. The fourth aspect of the disclosure may seek to enable new vehicles and/or legacy vehicles to be conveniently configured, by software installation/update, to balance tyre wear with other operational considerations of a vehicle.

According to a fifth aspect of the disclosure, there is provided a non-transitory computer-readable storage medium comprising instructions, which when executed by processing circuitry, cause the processing circuitry to perform the computer-implemented method of the third aspect. The fifth aspect of the disclosure may seek to enable new vehicles and/or legacy vehicles to be conveniently configured, by software installation/update, to balance tyre wear with other operational considerations of a vehicle.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

**BRIEF DESCRIPTION OF THE DRAWINGS**

Examples are described in more detail below with reference to the appended drawings.

**FIG. 1** schematically shows a side view of a vehicle according to an example.
**FIG. 2** is a flow chart of a computer-implemented method according to an example.
**FIG. 3** is an example plot of a cost evolution associated with axial torque.
**FIG. 4** is a flow chart of a computer-implemented method according to an example.
**FIG. 5** is an example plot of a cost evolution associated with longitudinal slip and a cost evolution associated with tyre wear.
**FIG. 6** is a schematic diagram of a computer system for implementing examples disclosed herein.

Like reference numerals refer to like elements throughout the description.

**DETAILED DESCRIPTION**

The detailed description set forth below provides information and examples of the disclosed technology with sufficient detail to enable those skilled in the art to practice the disclosure.

Many vehicles today are run with control requests that seek to meet a certain goal without taking tyre wear into account. For example, if regenerative braking is prioritised and therefore axial torque is increased, tyre wear is also increased. This can result in a number of negative impacts, for example reduction of friction and increase of particulate emissions from the tyres. In this scenario, the benefits of regenerative braking will at some point be outweighed by the downsides of tyre wear.

To remedy this, systems and methods are proposed for determining a limit for a control parameter for a vehicle. In particular, systems and methods are proposed in which a tyre wear limit is acquired for one or more tyres of the vehicle having an associated cost, for example a level of emissions associated with running the vehicle at that limit. An evolution of corresponding costs for a control parameter of the vehicle is also acquired, for example how emissions evolve with increasing axial torque, and used to find a value for the control parameter that corresponds to the tyre wear limit. That value can be used as a limit for the control parameter to ensure that costs associated with both tyre wear and control parameters are balanced appropriately.

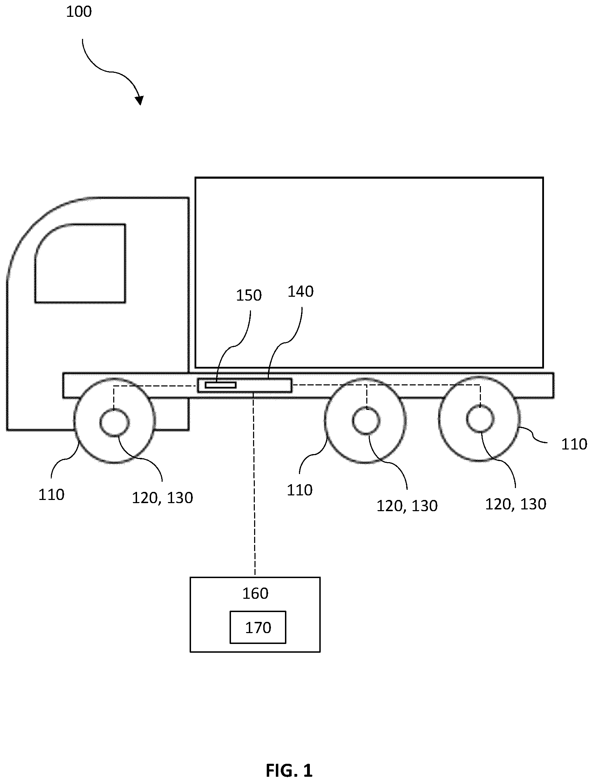

**FIG. 1** schematically shows a side view of an example vehicle **100** of the type considered in this disclosure. The vehicle **100** may be any suitable form of vehicle. For example, the disclosure can be applied in heavy-duty vehicles, such as trucks, buses, construction equipment, and multi-unit vehicle combinations, in personal vehicles such as cars, vans, or motorbikes, or in any other suitable form of vehicle. The vehicle **100** comprises a number of axles, each generally having two or more wheels **110**. Whilst three axles are shown, it will be appreciated that any suitable number of axles may be provided. It will also be appreciated that any number of the axles may be driven axles.

The vehicle **100** may comprise one or more sources or propulsion. For example, the vehicle **100** may comprise one or more electrical machines **120** such as electric motors and/or generators. The vehicle **100** may comprise one or more batteries (not shown) configured to provide power to the electrical machines **120**. In some examples, the vehicle **100** may also include another source of propulsion, for example an internal combustion engine (ICE). The vehicle **100** also comprises a drivetrain (not shown) to deliver mechanical power from the propulsion source (the electrical machines **120** or the ICE) to the wheels **110**.

The electrical machines **120** are configured to drive, e.g. provide torque and/or steering to, one or more axles or individual wheels **110** of the vehicle **100**. The electrical machines **120** can supply either a positive (propulsion) or negative (braking) force. The use of electrical machines **120** to supply a negative force is known as regenerative braking, in which case the electrical machines **120** may be operated as generators, in order to recover energy during braking.

Furthermore, the vehicle **100** may comprise one or more sets of service brakes **130.** The service brakes **130** can supply a negative (braking) force. The service brakes **130** may be, for example, frictional brakes such as pneumatic brakes. Pneumatic brakes use a compressor to fill the brake with air, which may be powered by the batteries. In some examples, the brakes may be electro-mechanical brakes. The energy recovered from regenerative braking by the electrical machines **120** can be stored in the batteries, and so regenerative braking may generally be preferred over using service brakes.

In some examples, the vehicle **100** may be a vehicle combination comprising a number of units, including a tractor unit and at least one trailing unit. A tractor unit is generally the foremost unit in a vehicle combination, and may comprise the cabin for the driver, including steering controls, dashboard displays and the like. Generally, the tractor unit is used to provide propulsion power for the vehicle combination **100.** A trailing unit is generally used to store goods that are being transported by the vehicle combination **100.** A trailing unit may be a truck, trailer, dolly and the like. A trailing unit may also provide propulsion to the vehicle combination **100.** In such examples, each unit may comprise its own electrical machines **120,** batteries, service brakes **130,** and the like. In this way, all units may provide propulsion to the vehicle combination **100.**

When the vehicle **100** is in motion, the wheels (or indeed tyres) **110** of the vehicle 100 experience slip. Slip can be expressed as the body slip on the vehicle **100** as a whole, or the slip on a given wheel **110,** which can be divided into longitudinal and lateral slip. These parameters are known in the art, and not discussed in detail here. However, it is noted that the longitudinal slip $s_{xik}$ and lateral slip $s_{yik}$ on a wheel **110** may be given by:

$$s_{xik} = \frac{R_{ik}\omega_{ik} - v_{wxik}}{|R_{ik}\omega_{ik}|} \qquad (1)$$

$$s_{yik} = \frac{v_{wyik}}{|R_{ik}\omega_{ik}|} \qquad (2)$$

where $R$ is the tyre radius, $\omega$ is the wheel rotational speed, $v_{wxik}$ and $v_{wyik}$ are the wheel hub velocity components in the wheel local coordinate system, $k$ is the wheel index, and $i$ is the unit index in the case of a multi-unit vehicle combination. Assuming linear tire behavior, that the longitudinal slip $s_{xik}$ on a wheel **110** may be given by:

$$s_{xik} = \frac{T_{mds,axle}G_r}{Rn_{axle}c_{s,tyre}} \qquad (3)$$

where $T_{mds,axle}$ is the output torque of motor drive system (MDS) acting on the axle, $G_r$ is the total gear ratio, $n_{axle}$ is the number of wheels on the axle (or axle side), and $c_{s,tyre}$ is a characteristic given by:

$$c_{s,tyre} = 10F_{z,tyre} \qquad (4)$$

where $F_{z,tyre}$ is the vertical force on the tyre.

Returning to **FIG. 1,** the vehicle **100** includes a controller **140** comprising processing circuitry **150.** The controller **140** is configured to control components of the vehicle, for example the electrical machines **120. FIG. 1** shows a common controller **140** for all electrical machines **120** of the vehicle **100,** however it will be appreciated that each electrical machine **120** may have its own respective controller **140.** In many cases, the controller **140** may be implemented in the structure of the electrical machine **120** itself. The controller **140** may be a microcontroller. In examples where the vehicle **100** is a vehicle combination, the vehicle **100** may include a global controller and a plurality of unit controllers, for example a controller for each unit. Vehicle motion management may therefore be available on a unit level to receive requests from a manual or virtual driver to coordinate the propulsion, braking and steering.

The controller **140** may receive control signals from a computer system **160** comprising processing circuitry **170.** The computer system **160** may be a vehicle control unit configured to perform various vehicle (unit) control functions, such as vehicle motion management. The computer system **160** may be local to the vehicle **100,** or may be a remote system, implemented at a distance from the vehicle **100.** The computer system **160** may be communicatively coupled to the controller **140** in any suitable way, for example via a circuit or any other wired, wireless, or network connection known in the art. Furthermore, the communicative coupling may be implemented as a direct connection between the controller **140** and the computer system **160,** or may be implemented as a connection via one or more intermediate entities.

One function of the controller **140** and the computer system **160** is to provide control inputs for the vehicle **100,** for example torque, force, or slip requests. These control inputs should enable a requested manoeuvre for the vehicle **100,** for example, straight-line driving, cornering, braking and the like, whilst ensuring safe and efficient motion of the vehicle 100. In many cases, these control inputs are determined to meet a certain goal, for example energy efficiency, safety, range, etc. However, tyre wear is not always taken into account.

When a vehicle is in operation, the interaction between the tyres and the surface on which the vehicle is driven causes the tyres to break down into small particles. This is particularly the case in acceleration, braking, and turning manoeuvres. This has several negative impacts. One impact is that the broken down particles are emitted into the environment, polluting air, water, and soil. A typical tyre is made of a blend of natural rubber, synthetic rubber, plastic polymers, metals, and other chemical compounds. Particulate emissions of these materials can be harmful to the environment. Another impact is that, as tyre wear increases, the friction provided by the tyre is reduced. This is because the tread depth of the tyre is reduced as the tyre is worn down. Tread depth directly affects a tyre's ability to grip the road surface, channel water away in wet conditions, and maintain overall traction and stability. As such, a tyre is not able to perform to its full capacity as tyre wear increases. Another impact is that, when a tyre becomes worn beyond its useful performance, it must be maintained and/or replaced. This causes a further increase in the environmental impact of tyre wear, as more tyres must be produced and transported and the vehicle must travel to a maintenance location.

These negative impacts are not often taken into account when determining control inputs for a vehicle **100.** For example, when determining a control input for a battery electric vehicle (BEV), regenerative braking may be prioritised as the energy recovered from regenerative braking can be stored in the batteries, thus increasing energy efficiency. This can be achieved, for example, using brake-blending strategies of BEVs, the entire brake request may be met by driven axles to maximize the regenerative capability. Such a brake-blending strategy is necessary to increase range and reduced energy consumption of BEVs. However, regenerative braking involves an increase in the axial torque on the wheels **110** of the vehicle **100,** leading to an increase in tyre wear. In this scenario, the benefits of regenerative braking will at some point be outweighed by the downsides of tyre wear.

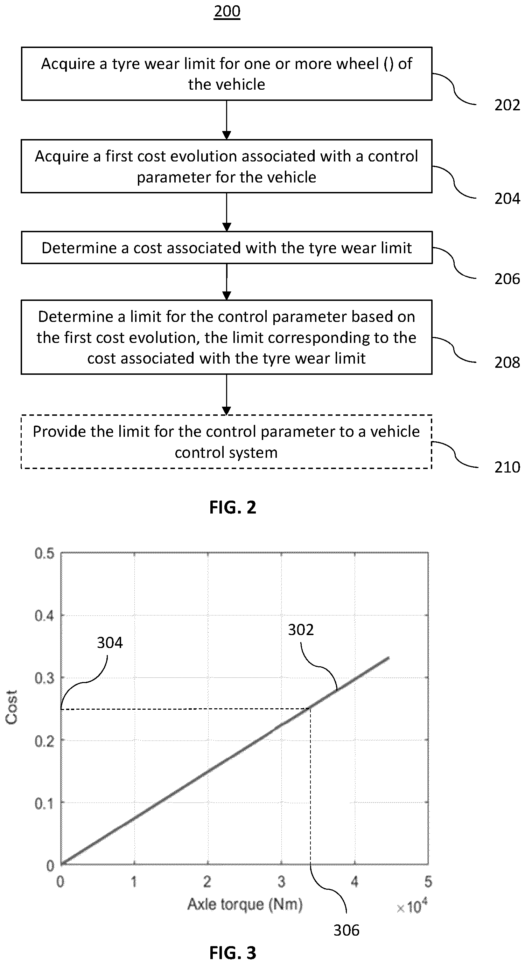

**FIG. 2** is a flow chart of a computer-implemented method **200** according to an example. The method **200** is for determining a limit for a control parameter for a vehicle, such as the vehicle **100,** such that control requests for the vehicle meet a certain limit for tyre wear. In this way, it can be ensured that costs associated with both tyre wear and control parameters are balanced appropriately. The method **200** may be implemented by processing circuitry of a computer system (e.g., the processing circuitry **150** of the controller **140,** or the processing circuitry **170** of the computer system **160** described in relation to **FIG. 1**).

At **202,** a tyre wear limit for one or more tyres of the vehicle is acquired. A tyre wear limit is a maximum acceptable amount of wear that a tyre can endure. This may be, for example, a maximum reduction in tread depth before the tyre is considered unsafe or illegal for use. Alternatively, a tyre wear limit may be a maximum amount allowed of particulate emissions from the tyre as it becomes worn. In some examples, the tyre wear limit may be set by a regulatory or legislative agency or may be a manufacturer recommendation, for example based on industry standards. In some examples, the tyre wear limit may be determined based on an associated cost evolution, as will be discussed in relation to **FIG.s 4** and **5.**

At **204,** a cost evolution associated with a control parameter of the vehicle **100** is acquired. The cost evolution represents how a certain cost evolves with respect to a control parameter that affects tyre wear. It is noted that a number of different factors may influence tyre wear, such as axle load, temperature, tyre pressure, lateral slip, longitudinal slip, longitudinal slip rate, sliding distance, tyre material, tyre tread shape, tyre size, road type, and vehicle velocity speed. However, many of these factors are not controllable during driving of the vehicle. Therefore, for the purposes of the method **200,** a controllable parameter is considered. In particular, the control parameter may be an axial torque (positive or negative) and/or a longitudinal slip associated with the one or more wheels **110** of the vehicle **100.**

The cost represented by the cost evolution may be any cost that is associated with a control parameter of the vehicle **100.** This may include, for example, costs that represent $CO_2$ emissions, electrical energy usage, and/or fuel consumption. An example cost evolution **302** is shown in **FIG. 3,** which shows how a particular cost increases with increasing axial torque on the wheel **110.** The cost evolution **302** may be determined in any suitable manner, for example from modelling, historical data or experiments.

In one example, a cost representing energy usage in relation to axial torque $C_t$ and a cost representing energy usage in relation to longitudinal slip $C_{sx}$ may be formulated as follows:

$$C_t = T_{mds,axle} G_r R d_s e_{batt} e_{mds} e_{gear} \qquad (5)$$

$$C_{sx} = s_{xik} n_{axle} c_{s,tyre} d_s e_{batt} e_{mds} e_{gear} \qquad (6)$$

where $d_s$ is a distance increment (e.g. road distance step size of the recorded data), $e_{batt}$ is the battery efficiency (which can be a function of electrical power, voltage, and state of charge, as well as battery characteristics), $e_{mds}$ is the MDS efficiency (which can be a function of speed, torque, voltage, and MDS characteristics), and $e_{gearbox}$ is the gear and final gears efficiency (which can be a function of speed, torque and gearbox characteristics). It will be appreciated that these costs are examples only, and an appropriate cost to describe the effects of axial torque and longitudinal slip may be formulated by an operator in any suitable manner.

At **206,** a cost associated with the tyre wear limit acquired at **202** may be determined. Where the tyre wear limit is a defined value, for example set by a regulatory or legislative agency, the cost can be determined in some examples by back calculation of equations (7) to (10) shown below. As shown in **FIG. 3,** a cost **304** associated with the tyre wear limit is determined. Where the tyre wear limit is determined based on an associated cost evolution, a cost may be determined by determining an intersection between two cost evolutions, as will be discussed in relation to **FIG.s 4** and **5.**

At **208,** a limit for the control parameter is determined based on the cost evolution and the tyre wear limit. Turning to **FIG. 3,** it can be seen that the cost **304** corresponds to a value **306** for the axial torque based on the cost evolution **302.** As the cost **304** corresponds to the tyre wear limit, the value **306** for the axial torque also corresponds to the tyre wear limit. As such, the value **306** for the axial torque can be set as a limit for the axial torque such that, when the vehicle **100** is controlled according to the limit, the resulting cost does not exceed the cost **304** associated with the tyre wear limit acquired at **202.** Where the tyre wear limit is determined based on an associated cost evolution, a limit for the control parameter may be determined by determining an intersection between two cost evolutions, as will be discussed in relation to **FIG.s 4** and **5.**

At **210,** a limit for the control parameter may be provided to a control system configured to determine control inputs for the vehicle **100,** for example the controller **140** or the computer system **160** described in relation to **FIG. 1.** The control system may then implement vehicle motion management such as brake-blending and MDS control using the determined limit. For example, vehicle performance can be optimised in a certain way, for example to improve fuel efficiency, safety, range, etc., according to the limit. This may be part of a brake-blending strategy when distributing a brake request across the MDS. It can also be used to limit the peak of an acceleration request if the total cost of operations is not to increase. Use of the limit for the control parameter may ensure that control of the vehicle **100** does not exceed the cost associated with the tyre wear limit.

In particular, the limit may be applied for one or more driven axles of the vehicle **100.** Tyre wear caused by axial torque and/or longitudinal slip is especially higher on driven axles of a vehicle compared to other axles. The reason is that the driven axle tyres are under more stress during acceleration and deceleration or retardation compared to other axles. For the same reason, and also for the fact that the response time of electric-driveline is faster than that of diesel vehicles, the driven axles of battery electric vehicles (BEVs) experience higher tyre wear.

The method **200** serves to balance tyre wear with other operational considerations of a vehicle. By setting a limit for a control parameter for a vehicle based on a tyre wear limit, it can be ensured that operation of the vehicle does not exceed the tyre wear limit. This means that vehicle performance can be optimised in a certain way without overly compromising tyre performance and causing negative effects such as reduction of friction and increase of particulate emissions from the tyres. The solution is computationally efficient and does not involve additional load on existing hardware of the vehicle **100** (for example, most BEV vehicles already have some kind of brake-blending strategy). In some implementations, a vehicle operator may be able to deactivate this function to disregard tyre wear cost, for example in range critical driving cycles.

As discussed above, the tyre wear limit and corresponding limit for a control parameter may be determined based on a cost evolution associated with tyre wear. This is shown in **FIG.s 4** and **5.**

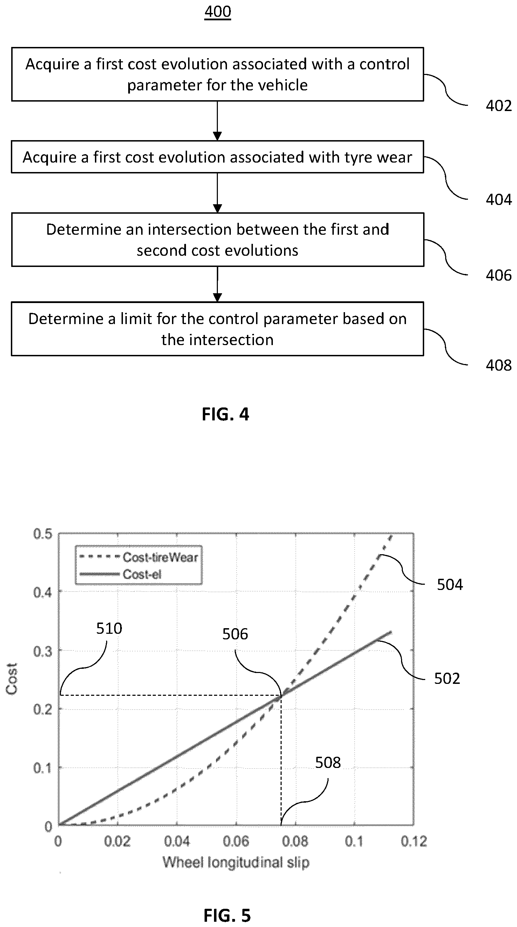

FIG. 4 is a flow chart of a computer-implemented method **400** according to an example. The method **400** is for determining a limit for a control parameter for a vehicle, and corresponds in part to the method **200,** in particular steps **202** to **208.** The method **400** may be implemented by processing circuitry of a computer system (e.g., the processing circuitry **150** of the controller **140,** or the processing circuitry **170** of the computer system **160** described in relation to **FIG. 1**).

At **402,** a cost evolution associated with a control parameter of the vehicle **100** is acquired. The cost evolution represents how a certain cost evolves with respect to a control parameter that affects tyre wear, and may be determined as described in relation to step **204** of the method **200.** An example cost evolution **502** is shown in **FIG. 5,** which shows how a certain cost increases with increasing longitudinal slip on the wheel **110.**

At **404,** a cost evolution associated with a tyre wear relative to the control parameter is acquired. For example, it can be determined how tyre wear is affected by increasing axial torque and/or (longitudinal) slip. For example, a cost may be determined that represents particulate emissions from a tyre, friction loss from a tyre (e.g. tyre tread depth reduction), and or costs associated with tyre maintenance (e.g. technical or indirectly related to energy and emissions caused by tyre production/transported and the need for the vehicle **100** to travel to a maintenance location). An example cost evolution **504** is shown in **FIG. 5,** which shows how a cost associated with tyre wear increases with increasing longitudinal slip on the wheel **110.** The cost evolution **504** may be determined in any suitable manner, for example from modelling, historical data or experiments.

In some examples, a cost evolution associated with a tyre wear can be determined based on modelling particulate emissions and/or tyre tread depth reduction. Particulate emissions $E_{wear}$ from a tyre, expressed in kilograms, may be determined as follows:

$$E_{wear,ik} = \frac{W_{tyre} K_{wear} d_s (s_{xik}^2 + s_{yik}^2)}{1000} \qquad (7)$$

where $W_{tyre}$ is the tyre width, and $K_{wear}$ is a fitting factor. The longitudinal slip $s_{xik}$ can be determined in any suitable manner, for example using equation (1), in the manner described in PCT patent application no. WO 2022/106004 in the name of Volvo Truck Corporation, based on a nonlinear tyre model, or linearly according to "An Empirical Tire-Wear Model for Heavy-Goods Vehicles", June 2021, Tire Science and Technology 50(3) , for example using equations (3) and (4). The lateral slip $s_{yik}$ can be determined in any suitable manner, for example using equation (2) or following the validated nonlinear vehicle model presented in WO 2022/106004 in.

A corresponding tyre tread depth reduction $d_h$ may be determined as follows:

$$d_h = \frac{E_{wear}}{2RW_{tyre}\pi D_{tyre}} \qquad (8)$$

where $W_{tyre}$ is the tyre material density.

In one example, a cost $C_{pe}(s)$ associated with particulate emissions from a tyre may be determined as a function of a longitudinal slip, for example as follows:

$$C_{pe}(s) = \frac{K_{wear}d_s(s_{xik}{}^2)d_0 n_{axle}}{2000R\pi D_{tyre}} \qquad (9)$$

Where $d_0$ is the tyre tread depth at the beginning of tyre life.

In one example, a cost $C_{pe}(T)$ associated with particulate emissions from a tyre may be determined as a function of axial torque, for example as follows:

$$C_{pe}(T) = \frac{K_{wear}d_s\left(\frac{T_{mds,axle}G_r}{Rn_{axle}c_{s,tyre}}\right)^2 d_0 n_{axle}}{2000R\pi D_{tyre}} \qquad (10)$$

In other examples, costs associated with friction loss and/or maintenance may be determined as a function of axial torque and/or longitudinal slip. By determining costs as functions of these control parameters, real-time control of the vehicle **100** can be implemented based on current vehicle states.

When determining the technical costs discussed herein, it should be ensured that they are normalised such that they can be compared in a relevant manner. This may be achieved in any suitable manner. In one example, the technical costs may be normalised based on a unit of currency to express them financially.

At **406,** an intersection between the cost evolutions is determined. The intersection represents the point beyond which an increase in the control parameter results in one or more of the costs increasing. The intersection defines a tyre wear limit, similar to that acquired at step **202** of the method **200,** and a limit for the control parameter, similar to that acquired at step **208** of the method **200.** As shown in **FIG. 5,** the intersection **506** between the cost evolutions **502, 504** corresponds to the point where an increase in the longitudinal slip results in an increase in both costs.

At **408,** a limit for the control parameter is determined based on the intersection. As shown in **FIG. 5,** the intersection **506** corresponds to a value **508** for the longitudinal slip. As the intersection **506** corresponds to a tyre wear limit, the value **508** for the longitudinal slip also corresponds to the tyre wear limit. A cost **510** associated with the tyre wear limit may also be determined, similar to that determined at step **206** of the method **200.** As such, the value **508** for the longitudinal slip can be set as a limit for the longitudinal slip such that, when the vehicle **100** is controlled according to the limit, the cost does not exceed the cost **510.**

The intersection may be expressed mathematically. For example, taking the cost given in equations (6) and (9) and setting the sum of the first and second costs to be zero, a longitudinal slip limit $s_{xik,lim}$ can be expressed as

$$s_{xik,lim} = \frac{2000R\pi D_{tyre}c_{s,tyre}e_{batt}e_{mds}e_{gear}}{K_{wear}d_0} \qquad (11)$$

An MDS axial torque $T_{mds,axle,lim}$ where the cost of tyre wear exceeds the gain of increased torque can be expressed as:

$$T_{mds,axle,lim} = \frac{2000R^4\pi D_{tyre}c_{s,tyre}{}^2 n_{axle}e_{batt}e_{mds}e_{gear}}{K_{wear}d_0 G_r} \qquad (12)$$

An axial torque limit $T_{axle,lim}$ can then be expressed as

$$T_{axle,lim} = T_{mds,axle,lim} G_r \qquad (13)$$

The method 400 serves to determine a limit for a control parameter for a vehicle with a dependence on a cost associated with tyre wear, rather than merely based on a tyre wear limit. In this way, operational considerations of a vehicle can be balanced with tyre wear. By setting a limit for a control parameter in this way, it can be ensured that operation of the vehicle does not exceed a certain overall cost that also takes tyre wear into account. This means that vehicle performance can be optimised in a certain way without overly compromising tyre performance and causing negative effects such as reduction of friction and increase of particulate emissions from the tyres.

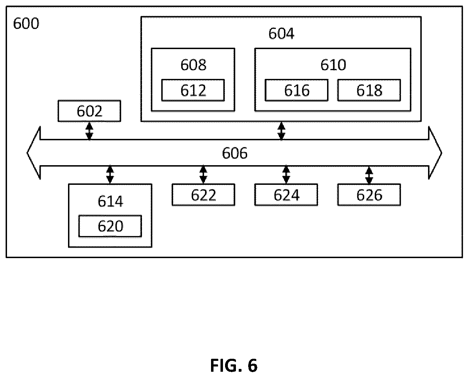

FIG. 6 is a schematic diagram of a computer system 600 for implementing examples disclosed herein. The computer system 600 is adapted to execute instructions from a computer-readable medium to perform these and/or any of the functions or processing described herein. The computer system 600 may be connected (e.g., networked) to other machines in a LAN, an intranet, an extranet, or the Internet. While only a single device is illustrated, the computer system 600 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 600 may comprise at least one computing device or electronic device capable of including firmware, hardware, and/or executing software instructions to implement the functionality described herein. The computer system 600 may include processing circuitry 602 (e.g., processing circuitry including one or more processor devices or control units), a memory 604, and a system bus 606. The computer system 600 may include at least one computing device having the processing circuitry 602. The system bus 606 provides an interface for system components including, but not limited to, the memory 604 and the processing circuitry 602. The processing circuitry 602 may include any number of hardware components for conducting data or signal processing or for executing computer code stored in memory 604. The processing circuitry 602 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 602 may further include computer executable code that controls operation of the programmable device.

The system bus 606 may be any of several types of bus structures that may further interconnect to a memory bus (with or without a memory controller), a peripheral bus, and/or a local bus using any of a variety of bus architectures. The memory 604 may be one or more devices for storing data and/or computer code for completing or facilitating methods described herein. The memory 604 may include database components, object code components, script components, or other types of information structure for supporting the various activities herein. Any distributed or local memory device may be utilized with the systems and methods of this description. The memory 604 may be communicably connected to the processing circuitry 602 (e.g., via a circuit or any other wired, wireless, or network connection) and may include computer code for executing one or more processes described herein. The memory 604 may include non-volatile memory 608 (e.g., read-only memory (ROM), erasable programmable read-only memory (EPROM), electrically erasable programmable read-only memory (EEPROM), etc.), and volatile memory 610 (e.g., random-access memory (RAM)), or any other medium which can be used to carry or store desired program code in the form of machine-executable instructions or data structures and which can be accessed by a computer or other machine with processing circuitry 602. A basic input/output system (BIOS) 612 may be stored in the non-volatile memory 608 and can include the basic routines that help to transfer information between elements within the computer system 600.

The computer system 600 may further include or be coupled to a non-transitory computer-readable storage medium such as the storage device 614, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 614 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 614 and/or in the volatile memory 610, which may include an operating system **616** and/or one or more program modules **618**. All or a portion of the examples disclosed herein may be implemented as a computer program **620** stored on a transitory or non-transitory computer-usable or computer-readable storage medium (e.g., single medium or multiple media), such as the storage device **614,** which includes complex programming instructions (e.g., complex computer-readable program code) to cause the processing circuitry **602** to carry out actions described herein. Thus, the computer-readable program code of the computer program **620** can comprise software instructions for implementing the functionality of the examples described herein when executed by the processing circuitry **602**. In some examples, the storage device **614** may be a computer program product (e.g., readable storage medium) storing the computer program **620** thereon, where at least a portion of a computer program **620** may be loadable (e.g., into a processor) for implementing the functionality of the examples described herein when executed by the processing circuitry **602**. The processing circuitry **602** may serve as a controller or control system for the computer system **600** that is to implement the functionality described herein.

The computer system **600** may include an input device interface **622** configured to receive input and selections to be communicated to the computer system **600** when executing instructions, such as from a keyboard, mouse, touch-sensitive surface, etc. Such input devices may be connected to the processing circuitry **602** through the input device interface **622** coupled to the system bus **606** but can be connected through other interfaces, such as a parallel port, an Institute of Electrical and Electronic Engineers (IEEE) 1394 serial port, a Universal Serial Bus (USB) port, an IR interface, and the like. The computer system **600** may include an output device interface **624** configured to forward output, such as to a display, a video display unit (e.g., a liquid crystal display (LCD) or a cathode ray tube (CRT)). The computer system **600** may include a communications interface **626** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

According to certain examples, there is also disclosed:

Example 1: A computer system (140, 160, 600) for determining a limit (306, 508) for a control parameter for a vehicle (100), the computer system (140, 160, 600) comprising processing circuitry (150, 170, 602) configured to: acquire a tyre wear limit for one or more wheels (110) of the vehicle (100); acquire a first cost evolution (302, 502) associated with a control parameter for the vehicle (100); and determine a limit (306, 508) for the control parameter based on the first cost evolution (302, 502) and the tyre wear limit; wherein control of the vehicle (100) according to the limit (306, 508) for the control parameter does not exceed a cost (304, 510) associated with the tyre wear limit.

Example 2: The computer system (140, 160, 600) of example 1, wherein the tyre wear limit is a regulatory tyre wear limit or manufacturer recommendation.

Example 3: The computer system (140, 160, 600) of example 1 or 2, wherein the processing circuitry (150, 170, 602) is further configured to: determine a cost (304, 510) associated with the tyre wear limit; and determine the limit (306, 508) for the control parameter based on the first cost evolution (302, 502), the limit (306, 508) corresponding to the cost (304, 510) associated with the tyre wear limit.

Example 4: The computer system (140, 160, 600) of example 1, wherein the processing circuitry (150, 170, 602) is configured to determine the tyre wear limit by: acquiring a second cost evolution (504) associated with tyre wear relative to the control parameter; determining an intersection (506) between the first cost evolution (502) and the second cost evolution (504); and determining a tyre wear limit corresponding to the intersection (506).

Example 5: The computer system (140, 160, 600) of example 4, wherein the second cost evolution (504) represents one or more of particulate emissions from a tyre, friction loss from a tyre, and costs associated with tyre maintenance.

Example 6: The computer system (140, 160, 600) of example 5, wherein the processing circuitry (150, 170, 602) is configured to determine a cost associated with particulate emissions and/or friction loss from a tyre as a function of a longitudinal slip associated with the one or more wheels (100).

Example 7: The computer system (140, 160, 600) of any of examples 4 to 6, wherein the first cost evolution (502) and the second cost evolution (504) are normalised.

Example 8: The computer system (140, 160, 600) of any preceding example, wherein the control parameter for the vehicle (100) comprises an axial torque and/or longitudinal slip associated with the one or more wheels (110).

Example 9: The computer system (140, 160, 600) of any preceding example, wherein the first cost evolution (302, 502) represents one or more of $CO_2$ emissions, electrical energy usage, or fuel consumption.

Example 10: The computer system (140, 160, 600) of any preceding example, wherein the one or more wheels (110) are associated with one or more driven axles of the vehicle (100).

Example 11: The computer system (140, 160, 600) of any preceding example, wherein the processing circuitry (150, 170, 602) is further configured to provide the limit (306, 508) for the control parameter to a control system (140, 160) configured to determine control inputs for the vehicle (100).

Example 12: A vehicle (100) comprising the computer system (140, 160, 600) of any preceding example.

Example 13: A computer-implemented method (200, 400) for determining a limit (306, 508) for a control parameter for a vehicle (100), the method (200,400) comprising: acquiring (202), by processing circuitry (150, 170, 602) of a computer system (140, 160, 600), a tyre wear limit for one or more wheels (110) of the vehicle (100); acquiring (204, 402), by the processing circuitry (150, 170, 602), a cost evolution (302, 502) associated with a control parameter of the vehicle (100); determining (208), by the processing circuitry (150, 170, 602), a limit (306, 508) for the control parameter based on the cost evolution (302, 502) and the tyre wear limit; wherein control of the vehicle (100) according to the limit (306, 508) for the control parameter does not exceed a cost (304, 510) associated with the tyre wear limit.

Example 14: The computer-implemented method (200, 400) of example 13, wherein the tyre wear limit is a regulatory tyre wear limit or manufacturer recommendation.

Example 15: The computer-implemented method (200, 400) of example 13 or 14, comprising, determining, by the processing circuitry (150, 170, 602), a cost (304, 510) associated with the tyre wear limit; and determining, by the processing circuitry (150, 170, 602), the limit (306, 508) for the control parameter based on the first cost evolution (302, 502), the limit (306, 508) corresponding to the cost (304, 510) associated with the tyre wear limit.

Example 16: The computer-implemented method (200, 400) of example 13, comprising, determining the tyre wear limit by: acquiring, by the processing circuitry (150, 170, 602), a second cost evolution (504) associated with tyre wear relative to the control parameter; and determining, by the processing circuitry (150, 170, 602), an intersection (506) between the first cost evolution (502) and the second cost evolution (504); and determining, by the processing circuitry (150, 170, 602), a tyre wear limit corresponding to the intersection (506).

Example 17: The computer-implemented method (200, 400) of example 16, wherein the second cost evolution (504) represents one or more of particulate emissions from a tyre, friction loss from a tyre, and costs associated with tyre maintenance.

Example 18: The computer-implemented method (200, 400) of example 17, comprising determining, by the processing circuitry (150, 170, 602), a cost associated with particulate emissions and/or friction loss from a tyre as a function of a longitudinal slip associated with the one or more wheels (100).

Example 19: The computer-implemented method (200, 400) of any of examples 16 to 18, wherein the first cost evolution (502) and the second cost evolution (504) are normalised.

Example 20: The computer-implemented method (200, 400) of any of examples 13 to 19, wherein the control parameter for the vehicle (100) comprises an axial torque and/or longitudinal slip associated with the one or more wheels (110).

Example 21: The computer-implemented method (200, 400) of any of examples 13 to 20, wherein the first cost evolution (302, 502) represents one or more of $CO_2$ emissions, electrical energy usage, or fuel consumption.

Example 22: The computer-implemented method (200, 400) of any of examples 13 to 21, wherein the one or more wheels (110) are associated with one or more driven axles of the vehicle (100).

Example 23: The computer-implemented method (200, 400) of any of examples 13 to 22, comprising providing, by the processing circuitry (150, 170, 602), the limit (306, 508) for the control parameter to a control system (140, 160) configured to determine control inputs for the vehicle (100).

Example 24: A computer program product comprising program code for performing, when executed by processing circuitry (150, 170, 602), the computer-implemented method (200, 400) of any of examples 13 to 23.

Example 25: A non-transitory computer-readable storage medium comprising instructions, which when executed by processing circuitry (150, 170, 602), cause the processing circuitry (150, 170, 602) to perform the computer-implemented method (200, 400) of any of examples 13 to 23.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1.  A computer system (140, 160, 600) for determining a limit (306, 508) for a control parameter for a vehicle (100), the computer system (140, 160, 600) comprising processing circuitry (150, 170, 602) configured to:

    acquire a tyre wear limit for one or more wheels (110) of the vehicle (100);
    acquire a first cost evolution (302, 502) associated with a control parameter for the vehicle (100); and
    determine a limit (306, 508) for the control parameter based on the first cost evolution (302, 502) and the tyre wear limit;
    wherein control of the vehicle (100) according to the limit (306, 508) for the control parameter does not exceed a cost (304, 510) associated with the tyre wear limit.

2.  The computer system (140, 160, 600) of claim 1, wherein the tyre wear limit is a regulatory tyre wear limit or manufacturer recommendation.

3.  The computer system (140, 160, 600) of claim 1 or 2, wherein the processing circuitry (150, 170, 602) is further configured to:

    determine a cost (304, 510) associated with the tyre wear limit; and
    determine the limit (306, 508) for the control parameter based on the first cost evolution (302, 502), the limit (306, 508) corresponding to the cost (304, 510) associated with the tyre wear limit.

4.  The computer system (140, 160, 600) of claim 1, wherein the processing circuitry (150, 170, 602) is configured to determine the tyre wear limit by:

    acquiring a second cost evolution (504) associated with tyre wear relative to the control parameter;
    determining an intersection (506) between the first cost evolution (502) and the second cost evolution (504); and
    determining a tyre wear limit corresponding to the intersection (506).

5.  The computer system (140, 160, 600) of claim 4, wherein the second cost evolution (504) represents one or more of particulate emissions from a tyre, friction loss from a tyre, and costs associated with tyre maintenance.

6.  The computer system (140, 160, 600) of claim 5, wherein the processing circuitry (150, 170, 602) is configured to determine a cost associated with particulate emissions and/or friction loss from a tyre as a function of a longitudinal slip associated with the one or more wheels (110).

7.  The computer system (140, 160, 600) of any of claims 4 to 6, wherein the first cost evolution (502) and the second cost evolution (504) are normalised.

8.  The computer system (140, 160, 600) of any preceding claim, wherein the control parameter for the vehicle (100) comprises an axial torque and/or longitudinal slip associated with the one or more wheels (110).

9.  The computer system (140, 160, 600) of any preceding claim, wherein the first cost evolution (302, 502) represents one or more of CO2 emissions, electrical energy usage, or fuel consumption.

10. The computer system (140, 160, 600) of any preceding claim, wherein the one or more wheels (110) are associated with one or more driven axles of the vehicle (100).

11. The computer system (140, 160, 600) of any preceding claim, wherein the processing circuitry (150, 170, 602) is further configured to provide the limit (306, 508) for the control parameter to a control system (140, 160) configured to determine control inputs for the vehicle (100).

12. A vehicle (100) comprising the computer system (140, 160, 600) of any preceding claim.

13. A computer-implemented method (200, 400) for determining a limit (306, 508) for a control parameter for a vehicle (100), the method (200,400) comprising:

acquiring (202), by processing circuitry (150, 170, 602) of a computer system (140, 160, 600), a tyre wear limit for one or more wheels (110) of the vehicle (100);
acquiring (204, 402), by the processing circuitry (150, 170, 602), a cost evolution (302, 502) associated with a control parameter of the vehicle (100);
determining (208), by the processing circuitry (150, 170, 602), a limit (306, 508) for the control parameter based on the cost evolution (302, 502) and the tyre wear limit;
wherein control of the vehicle (100) according to the limit (306, 508) for the control parameter does not exceed a cost (304, 510) associated with the tyre wear limit.

14. A computer program product comprising program code for performing, when executed by processing circuitry (150, 170, 602), the computer-implemented method (200, 400) of claim 13.

15. A non-transitory computer-readable storage medium comprising instructions, which when executed by processing circuitry (150, 170, 602), cause the processing circuitry (150, 170, 602) to perform the computer-implemented method (200, 400) of claim 13.

100

150    140

120, 130

110    120, 130    110

110

120, 130    120, 130

160

170

FIG. 1

## 200

Acquire a tyre wear limit for one or more wheel () of the vehicle — 202

↓

Acquire a first cost evolution associated with a control parameter for the vehicle — 204

↓

Determine a cost associated with the tyre wear limit — 206

↓

Determine a limit for the control parameter based on the first cost evolution, the limit corresponding to the cost associated with the tyre wear limit — 208

↓

Provide the limit for the control parameter to a vehicle control system — 210

**FIG. 2**

**FIG. 3**

400

```
┌─────────────────────────────────────────────┐
│ Acquire a first cost evolution associated    │
│ with a control parameter for the vehicle     │ ─── 402
└─────────────────────────────────────────────┘
                      │
                      ▼
┌─────────────────────────────────────────────┐
│ Acquire a first cost evolution associated    │
│ with tyre wear                               │ ─── 404
└─────────────────────────────────────────────┘
                      │
                      ▼
┌─────────────────────────────────────────────┐
│ Determine an intersection between the first  │
│ and second cost evolutions                   │ ─── 406
└─────────────────────────────────────────────┘
                      │
                      ▼
┌─────────────────────────────────────────────┐
│ Determine a limit for the control parameter  │
│ based on the intersection                    │ ─── 408
└─────────────────────────────────────────────┘
```

**FIG. 4**

**FIG. 5**

**FIG. 6**

Europäisches
Patentamt

European
Patent Office

Office européen
des brevets

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2022/324266 A1 (ALGHOONEH MANSOOR [CA] ET AL) 13 October 2022 (2022-10-13) * paragraph [0033] - paragraph [0076]; figures 1-4 * | 1-15 | INV. B60C11/24 B60W50/00 |
| A | US 2018/290501 A1 (OBLIZAJEK KENNETH L [US] ET AL) 11 October 2018 (2018-10-11) * paragraph [0016] - paragraph [0045]; figures 1-5 * | 1-15 | |
| A | US 2021/245554 A1 (CIARAVOLA VINCENZO [IT] ET AL) 12 August 2021 (2021-08-12) * paragraph [0049] - paragraph [0124]; figures 1-5 * | 1-15 | |
| A | US 2023/196854 A1 (LOPEZ DE LA CRUZ JULIANA MARIA [LU] ET AL) 22 June 2023 (2023-06-22) * paragraph [0050] - paragraph [0089]; figures 1-19 * | 1-15 | |
| A | EP 2 918 439 A2 (BOSCH GMBH ROBERT [DE]) 16 September 2015 (2015-09-16) * paragraph [0007] - paragraph [0053] * | 1-15 | TECHNICAL FIELDS SEARCHED (IPC) B60C B60W |
| A | DE 10 2009 030784 A1 (DAIMLER AG [DE]) 4 February 2010 (2010-02-04) * paragraph [0025] - paragraph [0109]; figures * | 1-15 | |
| A | US 2004/068359 A1 (NEISS KONSTANTIN [DE] ET AL) 8 April 2004 (2004-04-08) * paragraph [0009] - paragraph [0193]; figures 1-15 * | 1-15 | |

The present search report has been drawn up for all claims

| Place of search | Date of completion of the search | Examiner |
|---|---|---|
| Munich | 26 July 2024 | Jung, Wolfgang |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 2040

This annex lists the patent family members relating to the patent documents cited in  the above-mentioned European search report.
The members are as contained in the European Patent Office EDP file on
The European Patent Office is in no way liable for these particulars which are merely given for the purpose of information.

26-07-2024

| Patent document cited in search report | | Publication date | Patent family member(s) | | | Publication date |
|---|---|---|---|---|---|---|
| US 2022324266 | A1 | 13-10-2022 | CN | 115246290 | A | 28-10-2022 |
| | | | DE | 102022105447 | A1 | 13-10-2022 |
| | | | US | 2022324266 | A1 | 13-10-2022 |
| US 2018290501 | A1 | 11-10-2018 | CN | 108688414 | A | 23-10-2018 |
| | | | DE | 102018108050 | A1 | 11-10-2018 |
| | | | US | 2018290501 | A1 | 11-10-2018 |
| US 2021245554 | A1 | 12-08-2021 | CN | 112292271 | A | 29-01-2021 |
| | | | EP | 3807105 | A2 | 21-04-2021 |
| | | | JP | 7028997 | B2 | 02-03-2022 |
| | | | JP | 2021526476 | A | 07-10-2021 |
| | | | US | 2021245554 | A1 | 12-08-2021 |
| | | | WO | 2019239305 | A2 | 19-12-2019 |
| US 2023196854 | A1 | 22-06-2023 | EP | 4197822 | A1 | 21-06-2023 |
| | | | US | 2023196854 | A1 | 22-06-2023 |
| EP 2918439 | A2 | 16-09-2015 | CN | 104914715 | A | 16-09-2015 |
| | | | DE | 102014204354 | A1 | 10-09-2015 |
| | | | EP | 2918439 | A2 | 16-09-2015 |
| DE 102009030784 | A1 | 04-02-2010 | NONE | | | |
| US 2004068359 | A1 | 08-04-2004 | DE | 10345319 | A1 | 03-06-2004 |
| | | | US | 2004068359 | A1 | 08-04-2004 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022106004 A

**Non-patent literature cited in the description**

- **JUNE 2021**. An Empirical Tire-Wear Model for Heavy-Goods Vehicles. *Tire Science and Technology*, vol. 50 (3)